# EUROPEAN PATENT SPECIFICATION

(11) **EP 4 475 481 B1**
(45) Date of publication and mention of the grant of the patent: **27.05.2026**
(21) Application number: 23177413.4
(22) Date of filing: 05.06.2023
(51) Int. Cl.: H04L 9/40

(54) **CENTRAL UNIT, SERVICE PROVIDER UNIT, THREE-LAYER DIGITAL ASSET MANAGEMENT SYSTEM, AND METHOD FOR OPERATING SAID SYSTEM**
ZENTRALEINHEIT, DIENSTANBIETEREINHEIT, DREILAGIGES DIGITALES ANLAGENVERWALTUNGSSYSTEM UND VERFAHREN ZUM BETRIEB DES BESAGTEN SYSTEMS
UNITÉ CENTRALE, UNITÉ DE FOURNISSEUR DE SERVICES, SYSTÈME DE GESTION D'ACTIFS NUMÉRIQUES À TROIS COUCHES ET PROCÉDÉ DE FONCTIONNEMENT DUDIT SYSTÈME

(43) Date of publication of application: 11.12.2024
(73) Proprietor: Giesecke+Devrient advance52 GmbH, 81677 München (DE)
(72) Inventor: SEQUEIRA, Severino, 81677 München (DE)
(74) Representative: Ter Meer Steinmeister & Partner

(56) References cited:
- US-A1- 2017 324 733
- US-A1- 2021 049 253

## Description

The invention relates to a three-layer digital asset management system and a method to operate thereof. The invention also relates to a central unit and a service provider unit within the three-layer digital asset management system.

To use a service or a resource, a user (participant) may need to present an authorization and/or an identification. For such purposes, access control lists may be used. Such access control lists are potentially large, or they may need to always be connected to a network to access a central server.

Conventionally, there are role-based access control systems, short RBAC, which are centralized systems. These RBACs hold information about each user to perform certain tasks or map certain rights relating to the user of the role-based access control system. The RBACs also protect access to other resources to which the user does not have access rights, e.g. application programming interfaces, short APIs, that enable changes in security features.

Usually, RBACs are used as follows: When a user or its respective user unit requests a certain function (which may run under a corresponding API), this function asks the RBAC what this requesting user is allowed to execute. The RBAC transmits a response which either allows the execution of the requested function or not.

Disadvantageously, the requesting user or its respective requesting unit does not know its roles and therefore it does not know its permissions, because this information is stored centralized in the RBAC. On the other hand, the function being requested needs to call an external system to ask what kind of roles the user has for deciding if the user can execute the function or not.

US 2017/0324733 Al relates to a system that uses security posture values SPV to make informed decisions, such as decisions related to access to a network provider or to a service provider. A user equipment UE may be provided with a security posture value SPV. When the UE requests access to an access network, the access network compares the security posture associated with the UE to an expected security posture level associated with the access network in order to make a policy-based attachment decision.

US 2021/0049253 Al relates to a method for authenticating and authorizing clients when accessing a data protection system. The server of the data protection system may authenticate the client using a client certificate. Once the client is authenticated, the client can then be authorized. This is achieved, in part, by extracting the username from the client certificate and then ascertaining the role or privileges of the user by mapping the extracted username to role data associated with the server. The roles may determine how the user can use or access the data protection system.

It is an object of the present invention to provide a network system with interacting units that have different security levels. It is a further object that processes, network services and/or system functions can be requested securely and stably, while data can also be transmitted securely and anonymously. It is a further object that modified requirements regarding enhanced security features in the network system can be adapted easily without increasing management and computing effort.

This object is solved by the features of the independent claims. The respectively dependent claims concern preferred and advantageous implementations.

In a first aspect, a central unit within a three-layer digital asset management, short TLDAM, system is provided.

A TLDAM system may be a closed network system or an extendable network system for an unrestricted number of requesting units performing tasks or roles within one or more of the three layers in the TLDAM system. The TLDAM system comprises at least three layers and can also have four or more layers. Each layer is a hardware and/or software layer that comprises one or more of the requesting units. Each requesting unit may perform an inter-layer-communication and/or an intra-layer-communication within the TLDAM system. The network topology and/or network structure of the TLDAM system is not restricted.

The TLDAM system may be related to digital assets. Digital assets include but are not exclusive to digital documents, audible content, motion picture, and other relevant digital data that are currently in circulation or are, or may be stored on requesting units. Preferably, the digital asset is a token. Tokens may represent central bank digital currency, short CBDC, and their asset may be a monetary value. The digital asset may also include cryptocurrency assets.

The TLDAM network system may be implemented on a plurality of servers; each configured to execute network related tasks.

The central unit of the TLDAM system represents a first layer within the TLDAM system. The central unit may be used to administrate, manage and/or control the operation of the TLDAM system. The central unit may be used to control and monitor inter-layer-communication and/or intra-layer-communication within the TLDAM system.

The central unit may be implemented as a server within a client-server architecture, e.g., the clients being requesting units within the TLDAM system. The central unit may be implemented as a software application executable only within other software applications. The central unit may be realized as an online database to which other units in the TLDAM system may have access via an internet connection, such as TCP, IP, HTTPS or other suitable means. The central unit may be a master in a master-slave environment. The central unit may be a peer in a peer-to-peer TLDAM system.

The central unit of the TLDAM system comprises a receiving unit which is configured to receive a request of one or more requesting units of the TLDAM system.

A requesting unit is a unit within any of the at least three layers in the TLDAM system. The requesting unit may be a service provider unit, such as an electronic payment provider unit like a commercial credit institution, a corporate bank, and/or a private bank. etc. The requesting unit may be a transaction unit assigned to a participant or user within the TLDAM system. The transaction unit may be assigned to a natural or legal person to interact with the TLDAM system. The transaction unit may be a secure wallet within an electronic payment transaction system. A requesting unit may be a unit within the central unit, too.

A requesting unit may be a unit other than a central unit and/or other than a service provider unit.

Several requesting units having identical or having different security features may be provided within the TLDAM system. A requesting unit may be implemented as a secure transaction unit which sends requests to the central unit and receives responses from the central unit. The requesting unit may be one or more service provider units and/or one or more transaction units (participant units).

The received request may include at least two certificates, executable functions, demanded network services and/or commands. The request may include one or more tokens to be transferred, to be registered, or to be monetarized or to be protocolled or to be deleted or to be generated.

The request may include a request to or from a specific requesting unit for managing the or another requesting unit, such as loading or unloading of balance within the requesting unit, loading or unloading of requesting units within a service provider unit and so on.

The receiving unit within the central unit may be implemented as a transceiver or modem configured to receive the request from the requesting unit(s). The receiving unit may be configured to receive the requests sequentially and/or parallel. The receiving unit may be configured to forward (redirect) the request to a verifying unit within the central unit.

A verifying unit is arranged within the central unit of the TLDAM system. The verifying unit is configured to verify at least two certificates of the one or more requesting units; to generate a verification result, the verification result being an approval or a denial of the request of the one or more requesting units; to allow the execution of the request in case, the verification result from the verifying unit is the approval; and to block the execution of the request in case, the verification result from the verifying unit is the denial.

So, the verifying unit can interpret all received requests mainly to verify them instantly upon reception by means of proving at least two certificates which are part of a received request as sent by one or more requesting units. After interpreting the received request, a verification result is generated by the verification unit.

The verification result can be positive, meaning that the verification result is an approval of the request. The approval may be a permission to read data, to receive data, to execute network administration functions and other tasks for the requesting unit within the TLDMA system. The execution of the request is allowed in case, the verification result from the verifying unit is the approval.

The verification result can be negative, meaning that the verification result is a denial of the request. The denial may result in that no data transmission, or no performance of the requested function is carried out. The execution of the request is blocked in case, the verification result from the verifying unit is the denial.

Each request comprises at least two (digital) certificates. The certificates are different from each other. In cryptography, a digital certificate is an electronic document used to prove the validity of a public key of a PKI key pair. The certificate may include information about the public key, information about the identity of the certificate holder (participant, user), and a digital signature of an entity that has verified the certificate's contents. The entity is also called certificate issuer, which may be a certificate authority, short CA.

A first certificate of the at least two certificates (of the request) is an identification certificate of the requesting unit. This first certificate may provide the central unit with a trustworthy identity for a successful authentication of the requesting unit as a first requirement for permission of the request from the requesting unit.

A second certificate of the at least two certificates (of the request) is an attribute certificate for the request. Attribute certificates are electronic documents containing attributes associated to the requesting unit (assigned to a user, certificate holder) of the attribute certificate. The attribute certificate is preferably issued and managed by the central unit. The attribute certificate gives permission to the requesting unit to execute the request (e.g. a function) within the TLDAM system, such as access control, identification, authentication, encryption, receiving information. When associated attributes are mainly used for the purpose of authorization, an attribute certificate is called an authorization certificate.

This second certificate may be used to signal a specific role or permission of the requesting unit within the TLDAM system. So, it may permit defined actions for the requesting unit - this unit being firstly identified and authenticated by the first certificate. A role or defined action of such a requesting unit may be related to a security level, which the requesting unit may have.

This central unit enables an easier and faster verification of permissions of requesting units. The attribute certificates managed by the central unit are part of each request and so, each requesting unit is aware of its own role, and permissions.

With the inventive approach, the requesting unit provides an attribute certificate as the second certificate together with its request to execute a certain function. This second certificate is trusted because it was issued by the central unit which is considered to be a trusted party in the TLDAM system.

In this case the execution of the function can be controlled by inspecting and verifying the certificate if the user is identified and authorized. Alternatively, the execution of the function is blocked if the user cannot be identified or authorized. Changing the role of a requesting unit may lead to revocation of at least one of the second certificate. To withdraw a specific role from the requesting unit, merely the revocation of the second (attribute) certificate is necessary. So, administration of a requesting unit within the TLDAM system is enhanced and much easier. Management of certificate revocation lists is no longer needed.

In a preferred embodiment, the central unit further comprises a transmitting unit which is configured to send the denial to the requesting unit or to send the approval to the requesting unit. The transmitting unit may be implemented as hardware like a digital signaling processor and/or as software like an applet or a plug-in applet. Transmitting unit and receiving unit of the central unit may be combined as a transceiver unit. With sending the denial, the requesting unit is promptly informed that the request is not granted or executable.

In a preferred embodiment, for verifying the at least two certificates, the verifying unit is further configured to receive and to read the first certificate for verifying the identity of the requesting unit. So, the verifying unit may verify the at least two certificates upon receiving and reading. After reading the first certificate, the identity of the requesting unit may be verified or declared as invalid.

In a preferred embodiment, for verifying the two certificates, the verifying unit is further configured to receive and read the second certificate for verifying the authorization of the requesting unit, wherein the authorization is an access to one or more sub-units within the central unit. So, the verifying unit may read the second certificate for verifying the authorization certificate of the requesting unit to authorize the request.

Preferably, after verifying the first certificate for performing the identity check, the second certificate is verified for performing the authorization check. Advantageously both certificates may be received within the same (one) request or message and may be read in immediate succession. The verified authorization may result in granting access to one or more sub-units within the central unit.

In a preferred embodiment, the central unit may comprise an attribute manager. The attribute manager may be implemented as software or hardware. The attribute manager is configured to issue the second certificate to be verified by the verifying unit upon receiving requests by one or more requesting units. The issuing may be performed upon detecting an issuing condition.

An issuing condition may be the fulfilment of one or more security requirements of the requesting unit. A security requirement may be a security level of a hardware for the requesting unit, such as a secure storage unit, a trusted execution environment or another certified unit enhancing or assuring a level of trust. A security requirement may be the execution of a specific secure application and/or software, e.g. a predefined version of a specific software.

An issuing condition may be an authorization level required for accessing a unit in the TLDAM system. The authorization level may be a level within a hierarchy of the units in the TLDAM system. For instance, a service provider unit in the TLDAM system may have a higher authorization level than a transaction unit of a participant. For example, a service provider unit may be allowed to receive information about a transaction unit status or about tokens residing in the transaction unit, whereas a transaction unit is permitted to receive such information.

The attribute manager is alternatively or additionally configured to revoke the second certificate upon detecting a revocation condition.

The revocation condition may be a fraud detection, e.g., a stolen certificate, a duplicated certificate, a modified certificate and/or a fraud behavior of the requesting unit, such as a high number of requests within a short time or a too high amount of monetary value requested to be transferred.

The revocation condition may be an expiration of the second certificate, e.g. an expiry date or time is achieved or overshoot.

The revocation condition may be a malfunction of the requesting unit, such as a software failure or bad transmission conditions or high number of lost or damaged data packages or irresponsiveness of the requesting unit.

The revocation condition may be a time-out of requests to be responded by the requesting unit having the second certificate revoked. It may be implemented that a plurality of time-outs, e.g., a predefined number such as 3, 5 or 10 time-outs, result in the revocation of the requesting unit, because the trustworthiness is lost.

The revocation condition may be an increase of a security level of the TLDAM system. For instance, a higher level of security level is implemented in the TLDAM system, the requesting units may per default need to apply for new second certificates and the older second certificates are automatically revoked to fulfill the security level.

The revocation condition may be a decrease of a security level of the requesting unit, for instance, if a requesting unit is considered as not trustworthy due to older hardware and/or software standards.

In a preferred embodiment, the central unit may further comprise a public-key-infrastructure, PKI, - Certification manager configured to issue the first certificate to be verified by the verifying unit. The PKI certification manager may also be configured to revoke the first certificate upon fraud detection. The certificate manager as part of the central unit reduces administrative effort such as overhead and/or control data as well as computational effort in the TLDAM system.

In a preferred embodiment, the central unit may further comprise one or more requested sub-units, wherein for each sub-unit the execution of the request is allowed or is blocked based on the verification result. The one or more sub-units provide services requested by the one or more requesting units. A requested sub-unit is a unit, to which the request by the requesting unit is directed to.

In a preferred embodiment, based on the verification result reading access to the one or more requested sub-units is allowed or blocked. The allowance of the request is based on the verification result as issued by the verifying unit. A reading access for the requesting units may be allowed or blocked by the requested units according to the verification result as set and/or determined by the verifying unit. A reading access is an access - if granted - to read data from a requested unit or sub-unit upon request.

In a preferred embodiment, the one or more sub-units of the central unit may be a token reference register sub-unit to register, deregister token that are exchanged in the TLDAM system.

In a preferred embodiment, the one or more sub-units of the central unit may be a system monitoring sub-unit, e.g. for fraud detection and/or system performance surveillance.

In a preferred embodiment, the one or more sub-units of the central unit may be a resolution manager sub-unit, e.g. for prioritizing requests and/or resolving conflicting results.

The one or more sub-units may provide internal services as requested by the token reference register and/or the system monitoring sub-unit and/or the resolution manager sub-unit.

The one or more sub-units like token reference register and/or the system monitoring sub-unit and/or the resolution manager sub-unit may provide external services as requested by the requesting units like service provider units and/or participant units.

In another aspect, there is provided a service provider unit being a requesting unit within the TLDAM system. The service provider unit comprises a transmitting unit, which is configured to send a request to a central unit as described above.

The service provider unit further comprises a control unit. The control unit is configured to access at least two certificates. These certificates may be local or inside or outside the TLDAM system.

A first certificate of the at least two certificates is an identification certificate of the service provider unit, and a second certificate of the at least two certificates is an authorization certificate of the service provider unit.

The service provider unit also comprises a receiving unit configured to receive data related to the request from the central unit only in case the request is approved by the central unit. So, the data is sent by the central unit towards the service provider unit only in case the request is approved by the central unit via the verifying unit. In case of a blocked request a denial message is sent to the requesting unit. Data transmission or execution of a function is omitted then.

In a preferred embodiment, the service provider unit is a financial service provider unit and/or a smart contract service provider unit and/or an exchange service provider unit. Each of them is configured to send requests and receives responses to/from the central unit and/or other requesting units within the TLDAM system. For example, a financial service provider may notify the issuance of a requesting unit (e.g., a transaction unit, such as a secure wallet) for a participant who has just subscribed to the service of the TLDAM system.

In a preferred embodiment, the service provider unit may be configured to send a request that comprises the at least two certificates to the central unit. This request administrates one or more other requesting units being a different service provider unit or/and being one or more participants within the TLDAM system.

In a preferred embodiment, the service provider unit is configured to communicate with one or more requested sub-units of the central unit directly or indirectly upon approval. The approval as result of a certificate verification as carried out by a verifying unit of the central unit is sent by the transmitting unit of the central unit afterwards.

In another aspect, there is provided a TLDAM system that comprises a central unit as described above and one or more requesting units. The one or more requesting units comprises one or more service provider units as described above and one or more participant units.

In a preferred embodiment, the one or more requesting units are implemented as a secure transaction unit of the one or more service provider units or a wallet in the TLDAM system.

In another aspect, there is provided a method to operate the TLDAM system as described above.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a conventional network including a RBAC system and two clients.
Fig. 2 shows an exemplary embodiment of a TLDAM system according to the invention mapped to the system components of the conventional network according to Fig. 1.
Fig. 3 shows an exemplary embodiment of a TLDAM system according to the invention.
Fig. 4 shows an exemplary embodiment of a central unit within a TLDAM system according to the invention.
Fig. 5 shows an exemplary embodiment of a service provider units within a TLDAM system according to the invention.
Fig. 6 shows an exemplary embodiment of a service provider unit interacting with a central unit within a TLDAM system according to the invention.
Fig. 7 shows an exemplary embodiments of participant pcp units in a TLDAM system according to the invention.

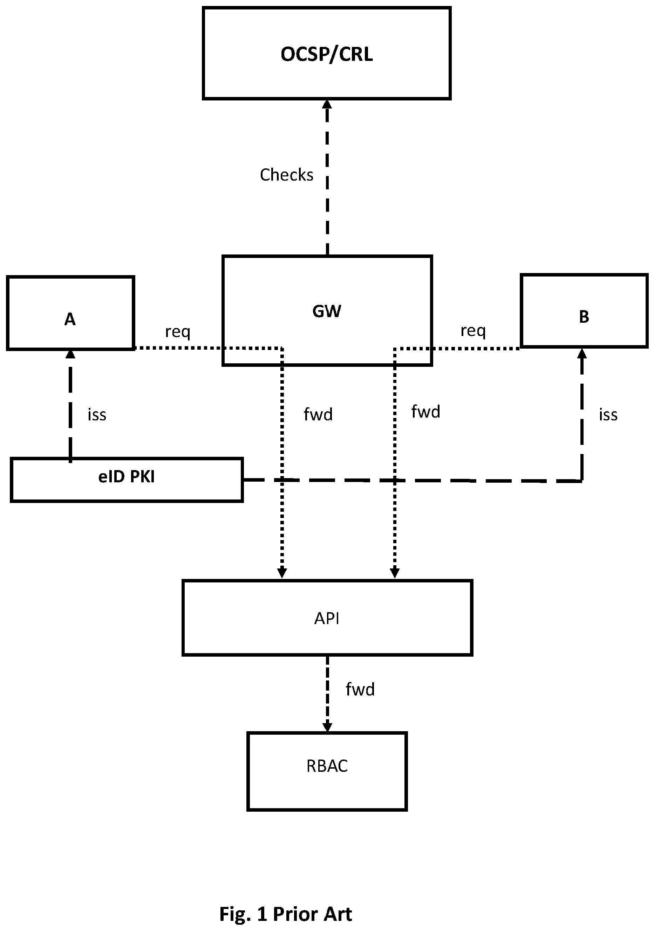

Fig. 1 shows a conventional network including a RBAC system and client A and client B. Both clients A, B use an eID PKI Suite software. This PKI suite software issues iss only one certificate for each client. Client A and client B each sends or transmits a request req to a gateway GW. The request req includes a certificate which identifies the transmitting client and further includes a service request corresponding to a task to be executed.

The gateway GW checks if the certificates in the requests req are valid by applying an online certificate status protocol OCSP which corresponds to a certification revocation list, CRL.

In case of a certificate, which is not listed by the CRL, the gateway GW forwards fwd the now validated request req to an application programming interface API provided with protected access which results in an access only for authenticated clients having a validated or verified ID certificate. The application programming interface API then transmits the request req as extracted from the message containing the request req to a role-based access control system RBAC which checks the role of the client A or client B and gives permission or denies permission.

The requested service or task in the request req is only executed if the role of client A or client B - as stored in the role-based access control register - is authorized to do this task. In case the requesting unit, here client A respectively client B, is not given permission by the RBAC system to execute the requested task as provided with the API.

Disadvantageously, this conventional network system as shown in Fig. 1 needs the RBAC as a network component being implemented as a database which has to check and verify each arriving request in case of a successful authentication of client A or client B.

Checking and verifying each certificate of a request results in an extended volume of control data traffic occupying network resources which cannot be used for payload anymore.

Further on, it is unfavorable to implement a RBAC because the clients usually do not know their roles and information concerning these roles as stored in the RBAC system. In case of a system modification there is an effort to adjust modified roles of the requesting units in the RBAC system.

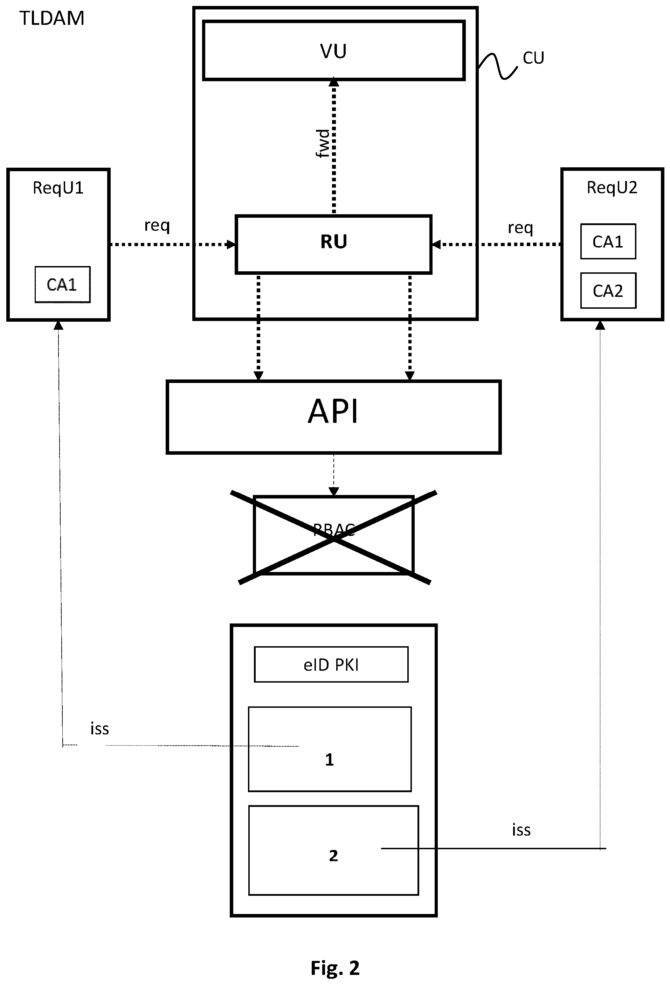

Fig. 2 shows an exemplary embodiment of a TLDAM system according to the invention mapped to the system components of the conventional network according to Fig. 1. As can be seen in Fig. 2 the TLDAM system according to the invention does not have a RBAC system.

The three-layer digital asset management TLDAM system comprises a central unit CU which includes a receiving unit RU. The receiving unit RU is configured to receive a request req message of one or more requesting units ReqU, here ReqU1 and ReqU2. A verifying unit VU of the central unit CU is configured to verify vcert at least two certificates CA1, CA2 of the one or more requesting units ReqU and subsequentially generates a verification result vres. This verification result vres may be either an approval appr or a denial den of the request req as sent by one or more of the requesting units ReqU.

In case, the verification result vres from the verifying unit VU is the approval appr the execution of the service or the tasked included in the request message req is given permission. The requested service can be provided by the three-layer digital asset management system or its application programming interface API due to certification validation vcert without any database query.

If the verification result vres from the verifying unit VU is the denial den, the execution of the service or the tasked included in the request message req is blocked without any database query for the role of the requesting unit ReqU.

The first certificate CA1 of the two certificates CA1, CA2 as sent by the requesting unit ReqU is its identification certificate for authenticating the requesting unit ReqU within the three-layer digital asset management TLDAM system.

Fig. 2 also shows an eID PKI Suite tool as component of the TLDAM system which is arranged outside a central unit CU. The eID PKI Suite tool comprises a PKI certificate manager which issues PKI certificates as first certificates CA1 for each requesting unit ReqU and further comprising an Attribute Manager 2 which issues attribute certificates as second certificate CA2 for each requesting unit. Fig. 2 shows the issuing of the first certificate CA1 for requesting unit ReqU1 by the PKI-Certification Manager 1 and the issuing of the second certificate CA2 for requesting unit ReqU2 by the Attribute Manager 2. Requesting unit ReqU2 is already a holder of the first certificate CA1.

The verifying unit VU is further configured read the first certificate CA1 for verifying the identity of the requesting unit ReqU1 or ReqU2 by verifying vcert the first certificate CA1 for authentication.

The second certificate CA2 of the two certificates CA1, CA2 is an authorization certificate for the request req of the requesting unit ReqU, here ReqU2. The authorization certificate gives access permission to the requesting unit ReqU2 to any service as defined by the application programming interface API. The verifying unit VU is further configured to receive the second certificate CA2 which was extracted previously from the request req message as sent by a requesting unit ReqU2. Now, the second certificate is read by the verification unit VU to verify an authorization of the requesting unit ReqU to get access to one or more sub-units 3 which may be integrated in the central unit CU.

The simultaneous validation of both certificates CA1 and CA2 reduces control traffic within the three-layer digital asset TLDAM system. The amount of payload can be increased because database queries for authentication and/or authorization are prevented.

The eID PKI Suite software may be integrated into the central unit CU or may be implemented as a distributed database like a master of master-slave system, or as a client of client-server system or as a peer of a peer-to-peer system, which is not a part of the central unit CU, but a part of the three-layer digital asset management TLDAM system.

According to the ITU-T's standardization X.509 standard at least the first certificate CA1 may be issued by the eID PKI Suite software.

The eID PKI Suite software may also be applied to issue second certificates CA2.

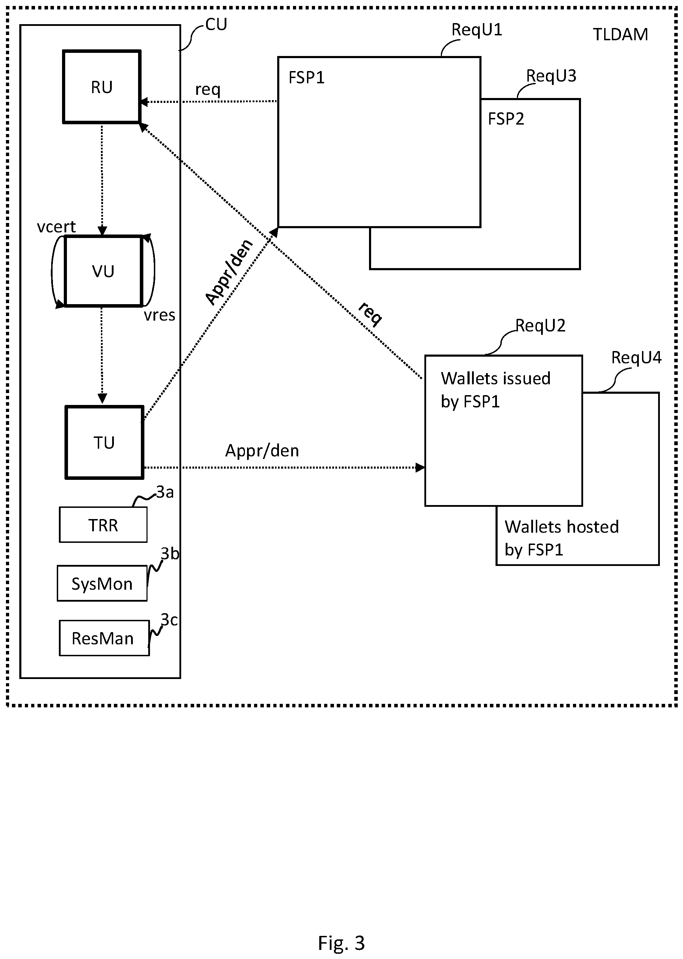

Fig. 3 shows an exemplary embodiment of a TLDAM system according to the invention. The TLDAM system includes the central unit CU, two service provider units SPU as Requesting Units ReqU1 und ReqU3 and participant units as requesting units ReqU2 and ReqU4, each are configured to send request messages req to the central unit CU to demand network services. A financial service provider FSP1 as Requesting unit ReqU1 sends the request req being received by the receiving unit RU of the central unit CU. This request is redirected to the verifying unit VU for verifying the at least to certificates CA1 and CA2 included in the request req. The central unit CU further comprises a transmitting unit TU being configured to send the approval appr or the denial den to the Requesting unit ReqU, here the requesting units ReqU1 and ReqU2. The verifying unit VU generates the verification result vres being forwarded to the transmitting unit TU for sending it to the requesting unit ReqU1. The message vres may be the approval appr or the denial den of the demanded service. For example, the financial service provider FSP1 may demand information about one or more participant units pcp, which are using the TLDAM system.

Fig. 3 also shows a participant unit pcp as a requesting unit ReqU2 sending a request message and receiving the approval appr or the denial as sent by the transmitting unit TU of the central unit CU. For example, the participant pcp may execute a wallet load or a wallet unload service or may apply for a credit.

The central unit CU as depicted in Fig. 3 also comprises at least three sub-units 3. Based on the verification result vres as set up by the verification unit VU an access of a requesting unit ReqU to these sub-units may be either blocked or allowed.

One sub-unit 3 may be a token reference register TRR 3a for the administration of Tokens, whereas a second sub-unit 3 may be a system monitoring sub-unit 3b for fraud detection. A third sub-unit 3 may be a resolution manager 3c which priories requests and/or resolves conflicting results or conflicting messages. The number of sub-units 3 is not restricted. The central unit CU may also comprise 4 or more sub-units 3.

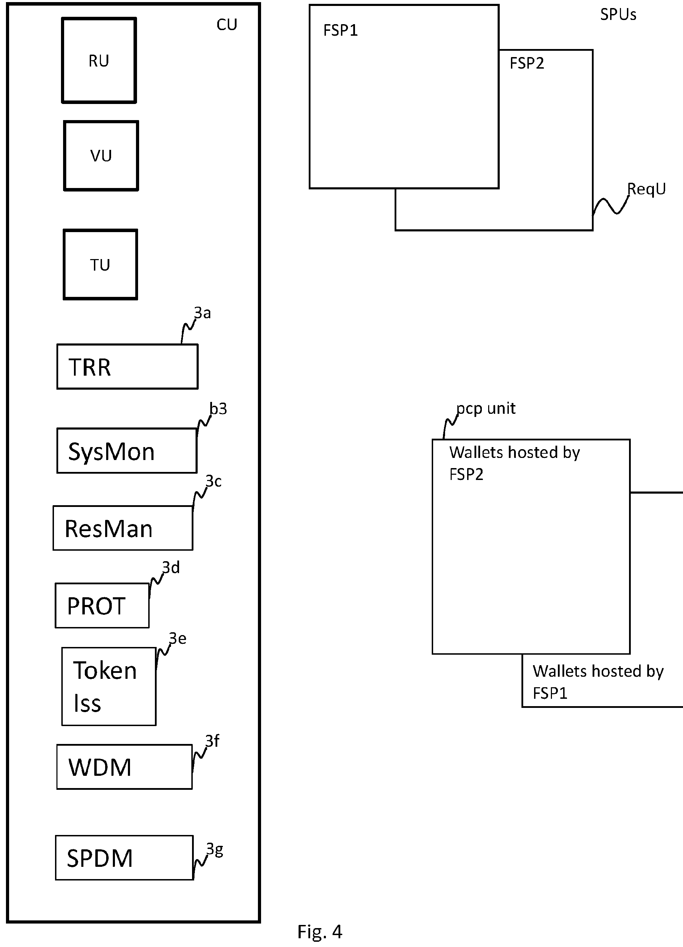

Fig. 4 shows an exemplary embodiment of a central unit CU within a TLDAM system according to the invention. The TLDAM includes an embodiment of the central unit CU which comprises a plurality of additional and/or optional sub-units 3.

A token- or account-register TRR sub-unit 3a may be implemented within in the central unit CU or may also be implemented outside. Fig. 4 shows the plurality of sub-units 3 being integrated within the central unit.

Each modification of an asset or a token as digital currency can be registered by replacement request messages containing first and/or second certificate CA1, CA2. For each asset or token a token reference can be stored in the token- or account-register TRR sub-unit 3a.

A transaction logging sub-unit PROT 3d may be implemented in the central unit CU for logging payment transactions between requesting units ReqU.

A token issuance sub-unit 3e is configured to generate new tokens or assets which are issued in an electronic transaction system being part of the TLDAM network system. The token issuance sub-unit 3e is also configured to delete tokens from the electronic transaction systems.

A wallet data manager WDM sub-unit 3f and a SP data manager SPDM which are information storage and retrieval units for wallet-related and SP-related data, respectively. The wallet data manager WDM sub-unit 3d may contain a Know Your Customer, KYC, system and may answer ID queries. For example, a participant or user pcp would like to know his wallet ID. Financial service providers FSPs may also query the wallet ID of users. Wallet issuance units of a financial service providers FSP may register the creation of a new wallet or modify existing entries.

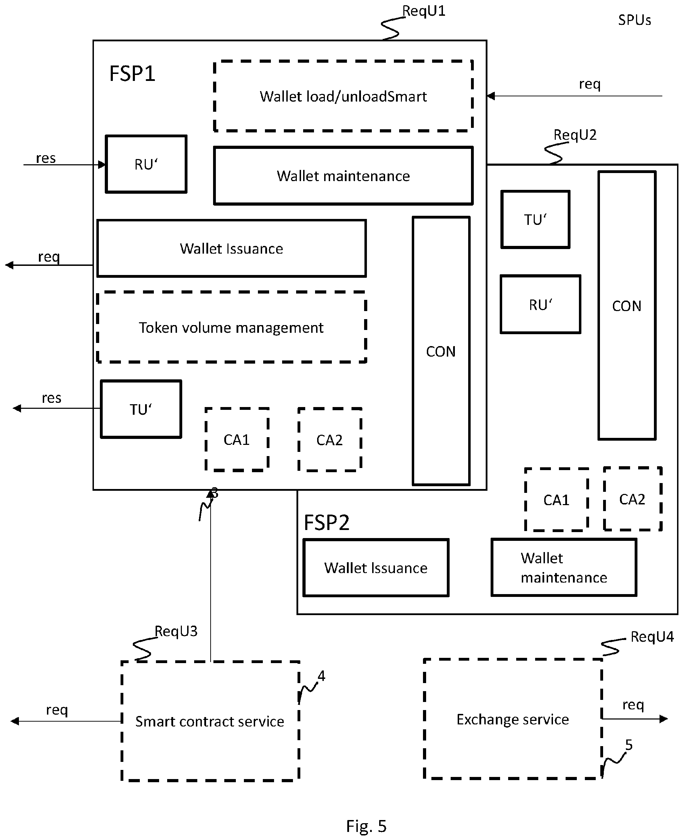

Fig. 5 shows an exemplary embodiment of service provider units SPU within a TLDAM system according to the invention.

Each of the illustrated service provider units SPU - not exclusively represented by financial service providers FSP1 and FSP2 - is provided with the first certificate CA1 and the second certificate CA2, and with their application programming interfaces APIs (not shown in Fig. 5). An API may be a wallet load/unload service as requested by participant pcp units, for example. The requested service as addressed by the API may also register tokens or assets for other participating units. Further services as provided by the SPUs are a wallet issuance service, a wallet maintenance service, and a token volume management service.

The service provider SPU further comprises a transmitting unit TU' for communicating with the central unit CU. Further on, a control unit CON is provided, which is configured to access the at least two certificates CA1 and CA2. The service provider unit SPU also comprises a receiving unit RU' which is configured to receive data related to the request req. For example, the central unit sends a monetary value being loaded by a requesting participant for his digital wallet.

Besides that, the service provider may also comprise a verifying unit (not) shown to process authentications and authorizations of users of higher layers, like participants pcp of layer 3, or different parties of participants of a an extended TLDAM system having four or five layers.

A wallet maintenance service may be an administration service carried out for the participant pcp, for example payment transactions being logged and displayed to provide this information for the participant.

A wallet issuing service may be a registration of a new wallet with the central unit CU. A Token volume management service of the service provider unit SPU may monetarize a wallet with a certain ID after an approval appr was sent by the central unit CU.

Further on, the embodiment of the inventive service provider unit SPU as shown in Fig. 5 may also represented by smart contract services and/or exchange services.

A smart contract is a kind of an intelligent digital contract based on computer protocols like the blockchain technology.

An exchange service supports the service provider units SPUs when monetarized tokens were transferred to a different country of the requesting unit ReqU. This country may have a different official or local currency and the exchange service may provide daily updated exchange rates.

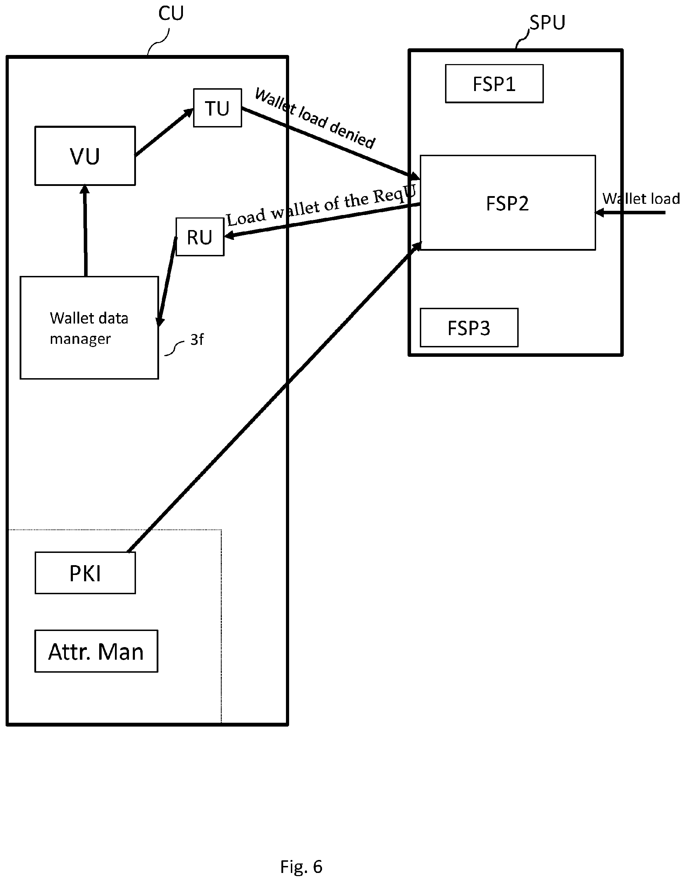

Fig. 6 shows an exemplary embodiment of a service provider unit SPU interacting with a central unit CU within a TLDAM system according to the invention.

The pictured embodiment includes the wallet data manager sub-unit 3d which is involved for providing financial service as requested by a participant (not shown), who wants to load his wallet via his financial service provider FSPm. The exemplary embodiment describes an interaction between the central unit CU as described above and the service provider unit SPU of Fig. 5. PKI-Certification Manager 1 and Attribute Manager 2 may both be integrated and implemented within the central unit CU as shown. But they may both or one of them be arranged outside the central unit CU, too.

Financial service provider FSPm receives a request req comprising an executable service "wallet load" and the required certificates CA1 and/or CA2. FSP2 may check the validity (not shown) of the at least two certificates CA1, CA2 of the req message and either send an approval appr or a denial den to the requesting unit ReqU (not shown). According to the invention the at least two certificates CA1 and/or CA2 are preferably be checked by the verifying unit VU of the central unit. CU.

After authentication and authorization via checking the validity of the certificate(s) CA1 and/or CA2 at the financial provider service, here FSP2 a request comprising a walletfunction "Load wallet of the requesting unit ReqU" is forwarded to the receiving unit RU of the central unit CU.

In case the validity according to vres corresponds to a denial, the walletfunction is blocked and the requesting unit will be notified via the denial message den, the message "wallet load denied" is delivered.

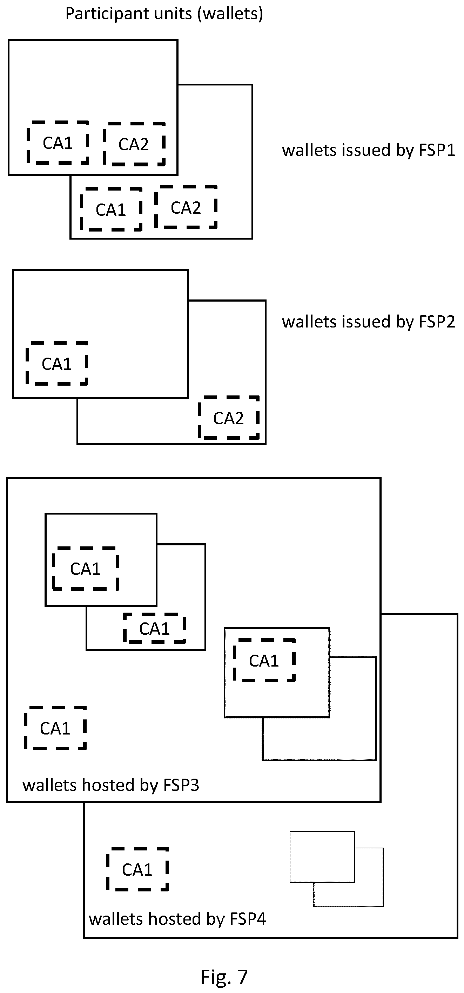

Fig. 7 shows an exemplary embodiment of two types of participant units pcp as requesting units ReqUs. The participant units or wallets may either be issued or hosted by one or more Financial service provider units FSPs. In the embodiment shown FSP1 issues two wallets provided with first CA1 and second certificate CA2 each.

FSP2 issued two wallets each feature only one certificate CA1, respectively CA2.

The wallets hosted and managed by FSP3 or FSP4 are not issued by them.

### Reference List

- CU: Central unit
- TLDAM: Three-layer digital asset management
- RU: Receiving unit of CU
- RU': Receiving unit of SPU
- req: Request (message)
- res: Response (message)
- ReqU: Requesting unit
- VU: Verifying unit
- CA1: Certificate 1 (identification, authentication)
- CA2: Certificate 2 (attribute)
- appr: Approval
- den: Denial
- vcert: verify certificate
- vres: verification result
- iss: issue
- rev: revoke
- fwd: forward
- 1: PKI-Certification Manager
- 2: Attribute Manager
- 3: sub-unit
- 4: smart contract
- 5: exchange server
- CON: control unit
- TRR: Token register
- SysMon: System Monitoring
- ResMan: Resolution Manager
- WDM: wallet data manager
- SPDM: Service provider data manager
- SPU: Service Provider Unit
- CON: control unit of SPU
- Pcp: Participant unit
- TU: transmitting unit
- TU': transmitting unit
- A: client A
- B: client B
- GW: Gateway
- OCSP: online certificate status protocol
- API: Application programming interface
- RBAC: Role based access control
- eID PKI: eID PKI Suite Software

## Claims

1. A central unit (CU) configured to operate in a three-layer system, the central unit comprising:
• a receiving unit (RU) configured to receive a request (req) of one or more requesting units (ReqU) of the three-layer system; and
• a verifying unit (VU) configured to:
o verify (vcert) at least two certificates (CA1, CA2) of the one or more requesting units (ReqU);
o generate a verification result (vres), the verification result (vres) being an approval (appr) or a denial (den) of the request (req) of the one or more requesting units (ReqU);
o allowing the execution of the request (req) in case, the verification result (vres) from the verifying unit (VU) is the approval (appr); and
o blocking the execution of the request (req) in case, the verification result (vres) from the verifying unit (VU) is the denial (den);
• wherein a first certificate (CA1) of the at least two certificates (CA1, CA2) is an identification certificate of the requesting unit (ReqU); and
• wherein a second certificate (CA2) of the two certificates (CA1, CA2) is an attribute certificate for the request (req);
wherein
• the three-layer system is a three-layer digital asset management (TLDAM) system that relates to digital assets, wherein a digital asset preferably is a token representing a central bank digital currency;
• the verifying unit is further configured to read the second certificate (CA2) for verifying an authorization of the one or more requesting units (ReqU) to authorize the request;
• the one or more requesting units (ReqU) are financial service provider (FSP) units.

2. The central unit (CU) according to claim 1, further comprising a transmitting unit (TU) configured to send the denial (den) to the requesting unit (ReqU) or to send the approval (appr) to the requesting unit (ReqU).

3. The central unit (CU) according to claim 1 or 2, wherein for verifying (vcert) the at least two certificates (CA1, CA2), the verifying unit (VU) is further configured to receive and to read the first certificate (CA1) for verifying the identity of the requesting unit (ReqU).

4. The central unit (CU) according to any of the preceding claims, wherein for verifying (vcert) the two certificates (CA1, CA2), the verifying unit (VU) is further configured to receive and read the second certificate (CA2) for verifying the authorization of the requesting unit (ReqU), wherein the authorization is an access to one or more sub-units (3) within the central unit (CU).

5. The central unit (CU) according to any of the preceding claims, further comprising:
an attribute manager (2), wherein the attribute manager (2) is configured to:
• issue (iss) the second certificate (CA2) to be verified (vcert) by the verifying unit (VU) upon detecting an issuing condition, wherein the issuing condition is one or more of the following:
o fulfilling of one or more security requirements of the requesting unit (ReqU);
o fulfilling an authorization level required for accessing a unit in the three-layer digital asset management (TLDAM) system;
and/or
• revoke (rev) the second certificate (CA2) upon detecting a revocation condition, wherein the revocation condition is one or more of the following:
o fraud detection;
o expiration of the second certificate (CA2);
o malfunction of the requesting unit (ReqU)
o time-out of the request to be responded by the requesting unit (ReqU) having the second certificate (CA2) revoked;
o increase of a security level of the three-layer digital asset management (TLDAM) system;
o decrease of a security level of the requesting unit (ReqU).

6. The central unit (CU) according to one of the preceding claims, further comprising:
a PKI-Certification manager (1) configured to:
• issue (iss) the first certificate (CA1) to be verified by the verifying unit (VU); and/or
• to revoke (rev) the first certificate (CA1) upon fraud detection.

7. The central unit (CU) according to one of the preceding claims, further comprising one or more requested sub-units (3) for each sub-unit (3) the execution of the request (req) is allowed or blocked based on the verification result (vres), wherein the one or more sub-units (3) provide services requested by the one or more requesting units (ReqU).

8. The central unit (CU) according to claim 7, wherein based on the verification result (vres) reading access to the one or more requested sub-units (3) is allowed or blocked.

9. The central unit (CU) according to claim 7 or 8, wherein the one or more sub-units (3) are one or more of the following:
• a token reference register sub-unit (TRR);
• a system monitoring sub-unit (SysMon); and
• a resolution manager sub-unit (ResMan).

10. A service provider unit (SPU) being a requesting unit (ReqU) configured to operate in a three-layer digital asset management (TLDAM) system, the service provider unit (SPU) comprising:
• a transmitting unit (TU'), configured to send a request (req) to a central unit (CU) according to one of the preceding claims;
• a control unit (CON), configured to access at least two certificates (CA1, CA2), wherein a first certificate (CA1) of the at least two certificates (CA1, CA2) is an identification certificate of the service provider unit (SPU) and wherein a second certificate (CA2) of the at least two certificates (CA1, CA2) is an authorization certificate of the service provider unit (SPU); and
• a receiving unit (RU') configured to receive data related to the request (req) from the central unit (CU) only in case the request (req) is approved by the central unit (CU), the authorization certificate being read by the central unit for verifying an authorization of the service provider unit.

11. The service provider unit (SPU) according to claim 10 being a financial service provider (FSP) unit and/or a smart contract service provider unit (4) and/or an exchange service provider unit (5), each of them configured to send requests (req) and receives responses (res) to/from the central unit (CU) and/or other requesting units (ReqU) within the three-layer digital asset management (TLDAM) system.

12. The service provider unit (SPU) according to claim 10, wherein the request (req, req', req") to the central unit (CU) is a request for administration of one or more other requesting units (ReqU) assigned to one or more participants (pcp) within the three-layer digital asset management (TLDAM) system.

13. The service provider unit (SPU) according to any of the preceding claims 10 to 12, configured to communicate directly or indirectly with one or more requested sub-units (3) of the central unit (CU) upon approval(appr).

14. A three-layer digital asset management (TLDAM) system comprising:
• a central unit (CU) according to one of the preceding claims 1 to 9; and
• one or more requesting units (ReqU) comprising:
∘ one or more service provider units (SPU) according to one of the preceding claims 10 to 13; and
∘ one or more participant (pcp) units.

15. A method comprising the central unit and the one or more requesting units of a three-layer digital asset management (TLDAM) system according to claim 14 performing the respective steps for which they are configured according to said claim.

## Patentansprüche

1. Zentraleinheit (CU), die konfiguriert ist, in einem Dreischichtsystem zu arbeiten, wobei die Zentraleinheit Folgendes umfasst:
• eine Empfangseinheit (RU), die konfiguriert ist, eine Anforderung (req) einer oder mehrerer anfordernder Einheiten (ReqU) des Dreischichtsystems zu empfangen; und
• eine Prüfeinheit (VU), die konfiguriert ist zum:
∘ Prüfen (vcert) von mindestens zwei Zertifikaten (CA1, CA2) der einen oder der mehreren anfordernden Einheiten (ReqU);
o Erzeugen eines Prüfergebnisses (vres), wobei das Prüfergebnis (vres) eine Genehmigung (appr) oder eine Ablehnung (den) der Anforderung (req) der einen oder der mehreren anfordernden Einheiten (ReqU) ist;
o Erlauben der Ausführung der Anforderung (req), falls das Prüfergebnis (vres) von der Prüfeinheit (VU) die Genehmigung (appr) ist; und
o Blockieren der Ausführung der Anforderung (req), falls das Prüfergebnis (vres) von der Prüfeinheit (VU) die Ablehnung (den) ist; wobei
• ein erstes Zertifikat (CA1) der mindestens zwei Zertifikate (CA1, CA2) ein Identifizierungszertifikat der anfordernden Einheit (ReqU) ist;
• ein zweites Zertifikat (CA2) der zwei Zertifikate (CA1, CA2) ein Merkmalszertifikat für die Anforderung (req) ist;
• das Dreischichtsystem ein dreischichtiges digitales Vermögenswertmanagementsystem (TLDAM-System) ist, das sich auf digitale Vermögenswerte bezieht, wobei ein digitaler Vermögenswert bevorzugt ein Token ist, der eine digitale Währung einer Zentralbank repräsentiert;
• die Prüfeinheit ferner konfiguriert ist, das zweite Zertifikat (CA2) zum Prüfen einer Berechtigung der einen oder der mehreren anfordernden Einheiten (ReqU) zu lesen, um die Anforderung zu genehmigen; und
• die eine oder die mehreren anfordernden Einheiten (ReqU) Finanzdienstanbietereinheiten (FSP-Einheiten) sind.

2. Zentraleinheit (CU) nach Anspruch 1, die ferner eine Sendeeinheit (TU) umfasst, die konfiguriert ist, die Ablehnung (den) zur anfordernden Einheit (ReqU) zu senden oder die Genehmigung (appr) zur anfordernden Einheit (ReqU) zu senden.

3. Zentraleinheit (CU) nach Anspruch 1 oder 2, wobei zum Prüfen (vcert) der mindestens zwei Zertifikate (CA1, CA2) die Prüfeinheit (VU) ferner konfiguriert ist, das erste Zertifikat (CA1) zum Prüfen der Identität der anfordernden Einheit (ReqU) zu empfangen und zu lesen.

4. Zentraleinheit (CU) nach einem der vorhergehenden Ansprüche, wobei zum Prüfen (vcert) der zwei Zertifikate (CA1, CA2) die Prüfeinheit (VU) ferner konfiguriert ist, das zweite Zertifikat (CA2) zum Prüfen der Berechtigung der anfordernden Einheit (ReqU) zu empfangen und zu lesen, wobei die Berechtigung ein Zugriff auf eine oder mehrere Untereinheiten (3) in der Zentraleinheit (CU) ist.

5. Zentraleinheit (CU) nach einem der vorhergehenden Ansprüche, die ferner Folgendes umfasst:
einen Merkmalsmanager (2), wobei der Merkmalsmanager (2) konfiguriert ist zum:
• Ausstellen (iss) des zweiten Zertifikats (CA2), das durch die Prüfeinheit (VU) überprüft (vcert) werden soll, aufgrund der Detektion einer Ausstellbedingung, wobei die Ausstellbedingung eine oder mehrere der Folgenden ist:
o Erfüllen einer oder mehrerer Sicherheitsanforderungen der anfordernden Einheit (ReqU) und
∘ Erfüllen einer Berechtigungsstufe, die zum Zugreifen auf eine Einheit im dreischichtigen digitalen Vermögenswertmanagementsystem (ILDAM-System) erforderlich ist; und/oder
• Zurücknehmen (rev) des zweiten Zertifikats (CA2) aufgrund der Detektion einer Zurücknahmebedingung, wobei die Zurücknahmebedingung eine oder mehrere der Folgenden ist:
o eine Betrugsdetektion;
o ein Ablauf des zweiten Zertifikats (CA2);
o eine Fehlfunktion der anfordernden Einheit (ReqU);
∘ eine Zeitüberschreitung der Anforderung, die durch die anfordernde Einheit (ReqU) beantwortet werden soll, deren zweites Zertifikat (CA2) zurückgenommen werden soll;
o Erhöhen einer Sicherheitsstufe des dreischichtigen digitalen Vermögenswertmanagementsystems (TLDAM-System) und
o Verringern einer Sicherheitsstufe der anfordernden Einheit (ReqU).

6. Zentraleinheit (CU) nach einem der vorhergehenden Ansprüche, die ferner Folgendes umfasst:
einen PKI-Zertifizierungsmanager (1), der konfiguriert ist zum:
• Ausstellen (iss) des ersten Zertifikats (CA1), das durch die Prüfeinheit (VU) überprüft werden soll; und/oder
• Zurücknehmen (rev) des ersten Zertifikats (CA1) aufgrund einer Betrugsdetektion.

7. Zentraleinheit (CU) nach einem der vorhergehenden Ansprüche, die ferner eine oder mehrere angeforderte Untereinheiten (3) umfasst, wobei für jede Untereinheit (3) die Ausführung der Anforderung (req) auf der Grundlage des Prüfergebnisses (vres) erlaubt oder blockiert ist und die eine oder die mehreren Untereinheiten (3) Dienste bereitstellen, die durch die eine oder die mehreren anfordernden Einheiten (ReqU) angefordert werden.

8. Zentraleinheit (CU) nach Anspruch 7, wobei auf der Grundlage des Prüfergebnisses (vres) ein Lesezugriff auf die eine oder die mehreren angeforderten Untereinheiten (3) erlaubt oder blockiert ist.

9. Zentraleinheit (CU) nach Anspruch 7 oder 8, wobei die eine oder die mehreren Untereinheiten (3) eine oder mehrere der folgenden sind:
• eine Tokenbezugsregisteruntereinheit (TRR);
• eine Systemüberwachungsuntereinheit (SysMon) und
• eine Auflösungsmanageruntereinheit (ResMan).

10. Dienstanbietereinheit (SPU), die eine anfordernde Einheit (ReqU) ist, die konfiguriert ist, in einem dreischichtigen digitalen Vermögenswertmanagementsystem (TLDAM-System) zu arbeiten, wobei die Dienstanbietereinheit (SPU) Folgendes umfasst:
• eine Sendeeinheit (TU'), die konfiguriert ist, eine Anforderung (req) zu einer Zentraleinheit (CU) nach einem der vorhergehenden Ansprüche zu senden;
• eine Steuereinheit (CON), die konfiguriert ist, auf mindestens zwei Zertifikate (CA1, CA2) zuzugreifen, wobei ein erstes Zertifikat (CA1) der mindestens zwei Zertifikate (CA1, CA2) ein Identifizierungszertifikat der Dienstanbietereinheit (SPU) ist und ein zweites Zertifikat (CA2) der mindestens zwei Zertifikate (CA1, CA2) ein Berechtigungszertifikat der Dienstanbietereinheit (SPU) ist; und
• eine Empfangseinheit (RU'), die konfiguriert ist, Daten, die mit der Anforderung (req) von der Zentraleinheit (CU) in Beziehung stehen, lediglich zu empfangen, falls die Anforderung (req) durch die Zentraleinheit (CU) genehmigt ist, wobei das Berechtigungszertifikat durch die Zentraleinheit zum Prüfen einer Berechtigung der Dienstanbietereinheit gelesen wird.

11. Dienstanbietereinheit (SPU) nach Anspruch 10, die eine Finanzdienstanbietereinheit (FSP-Einheit) und/oder eine Dienstanbietereinheit (4) für intelligente Verträge und/oder eine Austauschdienstanbietereinheit (5) ist, wobei jede davon konfiguriert ist, zu/von der Zentraleinheit (CU) und/oder weiteren anfordernden Einheiten (ReqU) im dreischichtigen digitalen Vermögenswertmanagementsystem (ILDAM-System) Anforderungen (req) zu senden und Antworten (res) zu empfangen.

12. Dienstanbietereinheit (SPU) nach Anspruch 10, wobei die Anforderung (req, req', req") zur Zentraleinheit (CU) eine Anforderung zur Administration einer oder mehrerer weiterer anfordernder Einheiten (ReqU), die einem oder mehreren Teilnehmern (pcp) im dreischichtigen digitalen Vermögenswertmanagementsystem (TLDAM-System) zugewiesen sind, ist.

13. Dienstanbietereinheit (SPU) nach einem der vorhergehenden Ansprüche 10 bis 12, die konfiguriert ist, mit einer oder mehreren angeforderten Untereinheiten (3) der Zentraleinheit (CU) aufgrund einer Genehmigung (appr) direkt oder indirekt zu kommunizieren.

14. Dreischichtiges digitales Vermögenswertmanagementsystem (TLDAM-System), das Folgendes umfasst:
• eine Zentraleinheit (CU) nach einem der vorhergehenden Ansprüche 1 bis 9 und
• eine oder mehrere anfordernde Einheiten (ReqU), die Folgendes umfassen:
o eine oder mehrere Dienstanbietereinheiten (SPU) nach einem der vorhergehenden Ansprüche 10 bis 13 und
∘ eine oder mehrere Teilnehmereinheiten (pcp-Einheiten).

15. Verfahren, das umfasst, dass die Zentraleinheit und die eine oder die mehreren anfordernden Einheiten eines dreischichtigen digitalen Vermögenswertmanagementsystems (TLDAM-System) nach Anspruch 14 die jeweiligen Schritte durchführen, für die sie gemäß dem Anspruch konfiguriert sind.

## Revendications

1. Unité centrale (CU) configurée pour fonctionner dans un système à trois couches, l'unité centrale comportant :
• une unité de réception (RU) configurée pour recevoir une requête (req) d'une ou de plusieurs unités requérantes (ReqU) du système à trois couches ; et
• une unité de vérification (VU) configurée pour :
∘ vérifier (vcert) au moins deux certificats (CA1, CA2) de la ou des unités requérantes (ReqU) ;
o générer un résultat de vérification (vres), le résultat de vérification (vres) étant une approbation (appr) ou un refus (den) de la requête (req) de l'unité ou des unités requérantes (ReqU) ;
∘ permettre l'exécution de la requête (req) dans le cas où le résultat de vérification (vres) provenant de l'unité de vérification (VU) est l'approbation (appr) ; et
∘ bloquer l'exécution de la requête (req) dans le cas où le résultat de vérification (vres) provenant de l'unité de vérification (VU) est le refus (den) ;
• dans laquelle un premier certificat (CA1) des au moins deux certificats (CA1, CA2) est un certificat d'identification de l'unité requérante (ReqU) ; et
• dans laquelle un second certificat (CA2) des deux certificats (CA1, CA2) est un certificat d'attributs pour la requête (req) ;
dans laquelle
• le système à trois couches est un système de gestion d'actifs numériques à trois couches (TLDAM) qui se rapporte à des actifs numériques, dans laquelle un actif numérique est de préférence un jeton représentant une monnaie numérique de banque centrale ;
• l'unité de vérification est en outre configurée pour lire le second certificat (CA2) afin de vérifier une autorisation de l'unité ou des unités requérantes (ReqU) pour autoriser la requête ;
• l'unité ou les unités requérantes (ReqU) sont des unités de fournisseurs de services financiers (FSP).

2. Unité centrale (CU) selon la revendication 1, comportant en outre une unité d'émission (TU) configurée pour envoyer le refus (den) à l'unité requérante (ReqU) ou pour envoyer l'approbation (appr) à l'unité requérante (ReqU).

3. Unité centrale (CU) selon la revendication 1 ou 2, dans laquelle, pour vérifier (vcert) les au moins deux certificats (CA1, CA2), l'unité de vérification (VU) est en outre configurée pour recevoir et lire le premier certificat (CA1) afin de vérifier l'identité de l'unité requérante (ReqU).

4. Unité centrale (CU) selon l'une quelconque des revendications précédentes, dans laquelle, pour vérifier (vcert) les deux certificats (CA1, CA2), l'unité de vérification (VU) est en outre configurée pour recevoir et lire le second certificat (CA2) afin de vérifier l'autorisation de l'unité requérante (ReqU), dans laquelle l'autorisation est un accès à une ou plusieurs sous-unités (3) au sein de l'unité centrale (CU).

5. Unité centrale (CU) selon l'une quelconque des revendications précédentes, comportant en outre :
un gestionnaire d'attributs (2), dans laquelle le gestionnaire d'attributs (2) est configuré pour :
• délivrer (iss) le second certificat (CA2) à vérifier (vcert) par l'unité de vérification (VU) lors de la détection d'une condition de délivrance, dans laquelle la condition de délivrance est un ou plusieurs des éléments suivants :
∘ satisfaire à une ou plusieurs exigences de sécurité de l'unité requérante (ReqU) ;
∘ satisfaire à un niveau d'autorisation requis pour accéder à une unité dans le système de gestion d'actifs numériques à trois couches (TLDAM) ;
et/ou
• révoquer (rev) le second certificat (CA2) lors de la détection d'une condition de révocation, dans laquelle la condition de révocation est un ou plusieurs des éléments suivants :
o détection de fraude ;
o expiration du second certificat (CA2) ;
o dysfonctionnement de l'unité requérante (ReqU) ;
∘ expiration du délai de réponse à la requête de l'unité requérante (ReqU) ayant le second certificat (CA2) révoqué ;
∘ élévation d'un niveau de sécurité du système de gestion d'actifs numériques à trois couches (TLDAM) ;
o abaissement d'un niveau de sécurité de l'unité requérante (ReqU).

6. Unité centrale (CU) selon l'une des revendications précédentes, comportant en outre :
un gestionnaire de certification de PKI (1) configuré pour :
• délivrer (iss) le premier certificat (CA1) à vérifier par l'unité de vérification (VU) ; et/ou
• révoquer (rev) le premier certificat (CA1) lors de la détection d'une fraude.

7. Unité centrale (CU) selon l'une des revendications précédentes, comportant en outre une ou plusieurs sous-unités interrogées (3) pour chaque sous-unité (3), l'exécution de la requête (req) étant autorisée ou bloquée sur la base du résultat de vérification (vres), dans laquelle la sous-unité ou les sous-unités (3) fournissent des services demandés par la ou les unités requérantes (ReqU).

8. Unité centrale (CU) selon la revendication 7, dans laquelle, sur la base du résultat de vérification (vres), l'accès en lecture à la sous-unité ou aux sous-unités interrogées (3) est autorisé ou bloqué.

9. Unité centrale (CU) selon la revendication 7 ou 8, dans laquelle la sous-unité ou les sous-unités (3) sont un ou plusieurs des éléments suivants :
• une sous-unité de registre de référence de jeton (TRR) ;
• une sous-unité de surveillance de système (SysMon) ; et
• une sous-unité de gestionnaire de résolution (ResMan).

10. Unité de fournisseur de services (SPU) étant une unité requérante (ReqU) configurée pour fonctionner dans un système de gestion d'actifs numériques à trois couches (TLDAM), l'unité de fournisseur de services (SPU) comportant :
• une unité d'émission (TU'), configurée pour envoyer une requête (req) à une unité centrale (CU) selon l'une des revendications précédentes ;
• une unité de commande (CON), configurée pour accéder à au moins deux certificats (CA1, CA2), dans laquelle un premier certificat (CA1) des au moins deux certificats (CA1, CA2) est un certificat d'identification de l'unité de fournisseur de services (SPU) et dans laquelle un second certificat (CA2) des au moins deux certificats (CA1, CA2) est un certificat d'autorisation de l'unité de fournisseur de services (SPU) ; et
• une unité de réception (RU') configurée pour recevoir des données associées à la requête (req) de l'unité centrale (CU) uniquement dans le cas où la requête (req) est approuvée par l'unité centrale (CU), le certificat d'autorisation étant lu par l'unité centrale pour vérifier une autorisation de l'unité de fournisseur de services.

11. Unité de fournisseur de services (SPU) selon la revendication 10 étant une unité de fournisseur de services financiers (FSP) et/ou une unité de fournisseur de services contractuels intelligents (4) et/ou une unité de fournisseur de services d'échange (5), chacune d'elles étant configurée pour envoyer des requêtes (req) et recevoir des réponses (res) vers/depuis l'unité centrale (CU) et/ou d'autres unités requérantes (ReqU) au sein du système de gestion d'actifs numériques à trois couches (TLDAM).

12. Unité de fournisseur de services (SPU) selon la revendication 10, dans laquelle la requête (req, req', req") à l'unité centrale (CU) est une requête d'administration d'une ou plusieurs autres unités requérantes (ReqU) affectées à un ou plusieurs participants (pcp) au sein du système de gestion d'actifs numériques à trois couches (TLDAM).

13. Unité de fournisseur de services (SPU) selon l'une quelconque des revendications 10 à 12 précédentes, configurée pour communiquer directement ou indirectement avec une ou plusieurs sous-unités interrogées (3) de l'unité centrale (CU) lors d'une approbation (appr).

14. Système de gestion d'actifs numériques à trois couches (TLDAM) comportant :
• une unité centrale (CU) selon l'une des revendications 1 à 9 précédentes ; et
• une ou plusieurs unités requérantes (ReqU) comportant :
o une ou plusieurs unités de fournisseur de services (SPU) selon l'une des revendications 10 à 13 précédentes ; et
∘ une ou plusieurs unités de participants (pcp).

15. Procédé comportant l'unité centrale et l'unité ou les unités requérantes d'un système de gestion d'actifs numériques à trois couches (TLDAM) selon la revendication 14, réalisant les étapes respectives pour lesquelles elles sont configurées selon ladite revendication.
